(19) **Europäisches Patentamt**

**European Patent Office**

**Office européen des brevets**

(11) **EP 1 432 171 B1**

(12) **FASCICULE DE BREVET EUROPEEN**

(45) Date de publication et mention
de la délivrance du brevet:
**23.08.2006 Bulletin 2006/34**

(51) Int Cl.:
*H04L 12/18* (2006.01)        *G06F 17/30* (2006.01)
*H04M 3/56* (2006.01)

(21) Numéro de dépôt: **03293145.3**

(22) Date de dépôt: **12.12.2003**

(54) **Procédé et système de diffusion automatique et sumultanée de documents électroniques de formats distincts sur internet**

Verfahren und System zur automatischen und simultanen Verteilung elektronischer Dokumente mit verschiedenen Formaten auf dem Internet

Method and system for automatically and simultaneously distributing in Internet electronic documents of different formats

(84) Etats contractants désignés:
**AT BE BG CH CY CZ DE DK EE ES FI FR GB GR HU IE IT LI LU MC NL PT RO SE SI SK TR**

(30) Priorité: **16.12.2002 FR 0215940**

(43) Date de publication de la demande:
**23.06.2004 Bulletin 2004/26**

(60) Demande divisionnaire:
**05018729.3 / 1 603 270**

(73) Titulaire: **FRANCE TELECOM**
**75015 Paris (FR)**

(72) Inventeurs:
• **Paimparay, Christophe**
**22300 Lannion (FR)**
• **Moniz, Emmanuel**
**22300 Lannion (FR)**

(74) Mandataire: **Habasque, Etienne J. Jean-François et al**
**Cabinet Lavoix**
**2, Place d'Estienne d'Orves**
**75441 Paris Cédex 09 (FR)**

(56) Documents cités:
**EP-A- 1 132 847          WO-A-99/14926**
**US-A1- 2001 023 430      US-A1- 2002 073 152**
**US-B1- 6 212 192         US-B1- 6 295 550**
**US-B1- 6 487 585**

• **ENCARNACAO J ET AL: "A concept and system architecture for IT-based Lifelong Learning" COMPUTERS AND GRAPHICS, PERGAMON PRESS LTD. OXFORD, GB, vol. 22, no. 2-3, 6 mars 1998 (1998-03-06), pages 319-393, XP004145480 ISSN: 0097-8493**

**Description**

L'invention concerne un procédé et un système de diffusion automatique et simultanée de documents électroniques de formats distincts sur Internet.

A l'heure actuelle, les utilisateurs de postes de travail bénéficient des modes d'accès les plus divers vers le réseau Internet. Parmi ces modes d'accès, on peut citer, notamment, la liaison par modem par l'intermédiaire du réseau téléphonique commuté (RTC), la liaison par modem à haut débit (ADSL) ou encore, la liaison au réseau Internet par l'intermédiaire d'un réseau local sécurisé par un pare-feu.

Les différents modes de connexion et d'accès précités impliquent les contraintes dues, en outre, aux éléments de sécurité des réseaux d'entreprises, encore désignés réseaux locaux.

En particulier, il n'existe, actuellement, aucun service intégré permettant d'offrir une visualisation automatique et simultanée d'un même document électronique, quel que soit le format d'origine de celui-ci.

Parmi les différentes solutions proposées aux utilisateurs de l'Internet, la diffusion simultanée de pages Web nécessite l'installation d'un logiciel spécifique sur le poste de travail de chacun des participants à une session ou réunion de travail.

D'autres solutions préconisent l'adjonction d'un logiciel supplémentaire dit logiciel "plug-in", venant en fait se greffer sur le logiciel navigateur Internet, ce type de logiciel dépendant du type de navigateur Internet et du système d'exploitation utilisé par le terminal de l'utilisateur concerné.

US 6487585 décrit un procédé pour administrer des conférences en réseau, dans lequel un présentateur invite les participants à une présentation programmée. Le contenu de la présentation est transféré dans une banque de données. La présentation est contrôlée et envoyée par le présentateur, page après page, aux différents participants.

La présente invention a, au contraire, pour objet de remédier aux inconvénients des solutions actuellement proposées.

En particulier, un objet de la présente invention est la mise en oeuvre d'un procédé et d'un système de diffusion automatique et simultanée de documents électroniques de format distinct sur Internet, permettant à des utilisateurs de postes de travail situés à des endroits quelconques et accédant à l'Internet et/ou à l'Intranet par l'intermédiaire de différents réseaux d'accès de participer à une télé-réunion ou session commune, en consultant tous, simultanément et automatiquement, des documents électroniques aux formats d'origine les plus divers, diffusés par l'intermédiaire de l'Internet.

Un autre objet de la présente invention est également de permettre à différents utilisateurs de postes de travail connectés en réseau local ou réseau d'entreprise d'effectuer tout travail coopératif de leur choix avec d'autres utilisateurs de postes de travail connectés sur un autre réseau local ou réseau d'entreprise, indépendamment de l'existence de tout obstacle à la transmission de fichiers ou de données électroniques, tels que les pare-feu, proxy ou autres.

Un autre objet de la présente invention est, enfin, la mise en oeuvre d'un procédé et d'un système de diffusion automatique et simultanée de documents électroniques de format distinct sur Internet dans le cadre d'applications aussi variées que l'animation d'équipes commerciales, la mise en place et la conduite de réunions de projets, le télé-enseignement, la vente à distance ou la diffusion d'informations inter - ou intra - entreprise, indépendamment du type de navigateur Internet et du système d'exploitation utilisé par chacun des terminaux utilisateurs participant à la session.

Le procédé de diffusion automatique et simultanée de documents électroniques de formats distincts sur Internet entre différents utilisateurs de terminaux connectés par l'intermédiaire de réseaux d'accès distincts, au cours d'une session commune consistant en un accès commun à un serveur dédié à cette session, objet de la présente invention, est remarquable en ce qu'il consiste à initialiser cette session à l'initiative de l'un des utilisateurs de terminaux, organisateur de cette session, l'étape consistant à initialiser comprenant au moins, suite à une connexion du terminal de l'utilisateur organisateur à ce serveur dédié, l'établissement d'une liste des noms, prénoms et adresse électronique des autres utilisateurs invités à cette session et la sélection des documents électroniques à diffuser au cours de cette session, à transmettre, du terminal de l'utilisateur organisateur vers le serveur dédié, l'ensemble des documents électroniques à diffuser selon leur format distinct d'origine accompagné de la liste des autres utilisateurs invités, et, au niveau du serveur dédié, à transformer chacun des documents électroniques à diffuser en une pluralité de pages courantes successives en un format unique HTML et à mettre en ligne ces pages successives sur le site Internet de ce serveur dédié, à transmettre, par l'intermédiaire de ce serveur dédié, au moins vers chacun des terminaux utilisateurs invités, un message d'invitation de participation à cette session, ce message d'invitation comportant au moins l'adresse du site du serveur dédié et la date et l'heure de cette session, et suite à la connexion de l'un au moins de ces terminaux utilisateurs organisateur et/ou invités à ce serveur dédié pendant cette session, à autoriser conditionnellement l'accès de chacun de ces terminaux utilisateurs à la pluralité de pages courantes successives en ligne.

Le système de diffusion automatique et simultanée de documents électroniques de formats distincts sur Internet entre différents utilisateurs de terminaux connectés par l'intermédiaire de réseaux d'accès distincts, au cours d'une session commune consistant en un accès commun à un serveur dédié, objet de la présente invention, est remarquable en ce qu'il comprend au moins un serveur dédié constituant une plate-forme de services, cette plate-forme de services comportant au moins un module organisateur de session, permettant sur appel à l'initiative de l'un des utilisateurs de terminaux, organisateur de cette session, d'initialiser cette session, cette étape consistant à initialiser comprenant au moins, suite à une connexion du terminal de cet utilisateur organisateur à ce serveur dédié, l'établissement d'une liste des noms, prénoms et adresse électronique des autres utilisateurs invités à cette session et la sélection des documents électroniques à diffuser au cours de cette session, un module de réception et de transformation de ces documents électroniques à diffuser en une pluralité de pages courantes successives au format unique HTML, un module de mise en ligne de cette pluralité de pages courantes successives au format unique HTML, au niveau du site de ce serveur dédié, un module de transmission de messages d'invitation de participation à cette session vers chacun des terminaux utilisateurs organisateur et invités, chaque message d'invitation comportant au moins l'adresse de ce site serveur dédié et la date et l'heure de cette session, et un module de contrôle d'accès au site de ce serveur dédié par chacun des terminaux utilisateurs, ce module de contrôle d'accès comprenant un module d'authentification du tout terminal utilisateur organisateur vis-à-vis de la plate-forme de services respectivement de tout terminal utilisateur organisateur et invité vis-à-vis de cette session organisée par le terminal utilisateur organisateur.

Le procédé et le système objets de la présente invention trouvent application à l'organisation de sessions ou réunions vidéo ou télé-conférences ou autres, de forums, de transactions, par l'intermédiaire de l'Internet.

Ils seront mieux compris à la lecture de la description et à l'observation des dessins ci-après, dans lesquels :

- la figure 1 représente, à titre illustratif, un organigramme des étapes essentielles de mise en oeuvre du protocole objet de la présente invention ;
- la figure 2A représente, à titre illustratif, une variante de mise en oeuvre d'une étape de transmission d'informations d'un terminal utilisateur organisateur d'une session vers un serveur dédié, représentée en figure 1 ;
- les figures 2B et 2C représentent des formes de messages spécifiques utiles pour la mise en oeuvre du protocole objet de la présente invention tel que représentée en figure 1 ;
- la figure 2D représente, à titre purement illustratif, un exemple de mise en oeuvre d'un processus de contrôle d'accès au serveur dédié par chaque terminal utilisateur invité, dans le cadre de l'exécution d'un accès conditionnel à ce serveur dédié pour participer à une session spécifique ;
- la figure 3 représente, à titre purement illustratif, un processus de changement d'affichage d'une page HTML courante susceptible d'être mis en oeuvre par tout terminal utilisateur organisateur ou invité, conformément au procédé objet de la présente invention ;
- la figure 4A représente, à titre illustratif, l'architecture d'un système de diffusion automatique et simultanée de documents électroniques de format distinct sur Internet conforme à l'objet de la présente invention ;
- la figure 4B représente, à titre illustratif, un mode de mise en oeuvre de l'architecture d'un serveur dédié plus particulièrement adapté à la réalisation d'un système conforme à l'objet de la présente invention tel que représenté en figure 4A ;
- la figure 5 représente, à titre illustratif, un mode de mise en oeuvre préférentiel non limitatif d'un procédé d'affichage simultané d'une page HTML, à partir d'un ensemble de pages HTML en ligne sur un serveur dédié, sur chacun des terminaux de différents utilisateurs organisés en un ensemble d'utilisateurs participant à une même session.

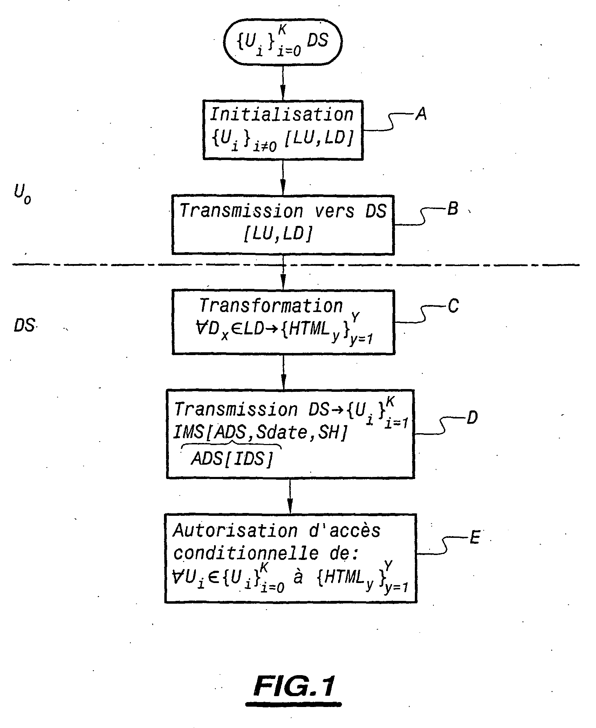

Une description plus détaillée du procédé de diffusion automatique et simultanée de documents électroniques de formats distincts sur Internet entre différents utilisateurs de terminaux, connectés par l'intermédiaire de réseaux d'accès distincts, conforme à l'objet de la présente invention, sera maintenant donnée en liaison avec la figure 1 et les figures suivantes.

D'une manière générale, on considère une pluralité de terminaux utilisateurs désignée $\{U_i\}_{i=0}^{K}$, l'ensemble de ces terminaux étant connecté par des moyens quelconques et des réseaux d'accès distincts à l'Internet.

On comprend ainsi que les utilisateurs précités sont situés à des endroits différents accédant à Internet ou à l'Intranet par différents réseaux d'accès tels que le réseau téléphonique commuté RTC, le réseau à haut débit ADSL pour "Asymmetric Digital Subscriber Line", un réseau local ou réseau d'entreprise LAN et tout réseau Extranet.

De manière plus spécifique mais non limitative, le procédé objet de la présente invention est mis en oeuvre lorsque l'ensemble des utilisateurs précités $\{U_i\}_{i=0}^{K}$ participe à une session commune, cette session consistant en un accès commun à un serveur dédié, noté DS, gérant cette session.

D'une manière plus particulière, on indique que la notion de session recouvre toute télé-réunion, conférence téléphonée, vidéo-conférence ou autres au cours de laquelle l'ensemble des utilisateurs précités sont amenés à consulter des documents de différents formats tels que des documents sous le format Word®, PowerPoint®, Excel®, documents, images ou autres diffusés par l'intermédiaire de l'Internet.

En ce qui concerne les sessions précitées, on indique que les situations d'usage classique concernent, notamment, le travail coopératif de personnes travaillant sur leur réseau d'entreprise avec d'autres personnes situées sur un autre réseau d'entreprise, l'animation d'équipes commerciales, les réunions de projets, le télé-enseignement, la vente à distance ou la simple diffusion d'informations en interne ou en externe dans le cadre d'une entreprise.

Conformément au procédé objet de la présente invention, celui-ci consiste, ainsi que représenté en figure 1, en une étape A, à initialiser la session à l'initiative de l'un des utilisateurs de terminaux, cet utilisateur étant par définition désigné "organisateur de la session", et noté $U_0$.

D'une manière plus spécifique, on indique que l'étape consistant à initialiser, étape A, comprend au moins, suite à une connexion du terminal de l'utilisateur organisateur $U_0$ au serveur dédié DS, l'établissement d'une liste de noms, prénoms et adresse électronique des autres utilisateurs invités à la session, ainsi que la sélection des documents électroniques à diffuser au cours de la session considérée.

Sur la figure 1, à l'étape A de celle-ci, l'opération d'établissement d'une liste de noms, prénoms et adresse électronique des autres utilisateurs invités consiste, pour l'utilisateur organisateur, à définir la liste précitée, désignée LU, à partir de l'ensemble des utilisateurs $\{U_i\}_{i\neq0}$, ainsi que bien entendu, une liste des documents électroniques à diffuser, cette liste étant notée LD.

D'une manière plus spécifique, on indique que la notion de liste n'est pas limitative et que toute liste peut être remplacée par un tableau de données, une structure de données ou autres.

L'opération A est alors suivie d'une opération B consistant à transmettre, du terminal de l'utilisateur organisateur $U_0$ vers le serveur dédié DS, l'ensemble des documents électroniques à diffuser selon leur format distinct d'origine accompagnés de la liste des autres utilisateurs invités, c'est-à-dire, en définitive, les listes LU et LD précédemment définies à l'étape A.

Le procédé objet de l'invention est alors poursuivi au niveau du serveur dédié DS et il consiste ensuite, en une étape C, à transformer chacun des documents électroniques à diffuser en une pluralité de pages courantes successives en un format unique HTML et à mettre en lignes les pages successives sur le site Internet du serveur dédié DS.

L'opération de transformation est notée :

-

$$\forall D_X \in LD \rightarrow \{HTML_y\}_{y=1}^{Y}$$

A partir de la relation précédente, on comprend que, pour tout document $D_X$ appartenant à la liste de documents transmise LD, on procède à la transformation en un ensemble de pages HTML successives, où $\underline{y}$ désigne une référence de page HTML, ainsi qu'il sera décrit ultérieurement dans la description. L'ensemble des pages HTML peut alors être mis en ligne au niveau du serveur dédié DS de manière classique compte tenu, toutefois, de la référence $\underline{y}$ attribuée à chacune d'elles, ainsi qu'il sera décrit ultérieurement dans la description.

L'étape C est alors suivie de l'étape D consistant à transmettre, par l'intermédiaire du serveur dédié DS, au moins vers chacun des terminaux utilisateurs invités, un message d'invitation de participation à la session.

Le message d'invitation de participation IMS est noté :

- IMS[ADS, Sdate, SH].

Il comporte au moins l'adresse du serveur dédié, adresse notée ADS, ainsi que la date et l'heure de la session, les paramètres Sdate et SH.

Bien entendu, l'adresse du serveur dédié ADS peut, avantageusement, être accompagnée d'un code de session sous forme d'une variable liée de code d'identification de session, noté IDS, l'adresse du serveur dédié et la variable liée précitées étant alors notées ADS[IDS].

Bien entendu, les informations précitées sont, de préférence, transmises de manière sécurisée selon les protocoles de sécurisation classiques vers chaque terminal utilisateur à partir du serveur dédié DS.

L'opération de transmission est notée :

- $DS \rightarrow \{U_i\}_{i=1}^{K}$ à l'étape D précitée.

Lors de la tenue de la session, c'est-à-dire à la date et à l'heure précédemment mentionnées, et suite à la tentative de connexion de chacun des terminaux utilisateurs, terminal utilisateur organisateur $U_0$ et terminaux utilisateurs invités, le protocole objet de l'invention est alors suivi d'une étape E consistant à autoriser conditionnellement l'accès de chacun des terminaux utilisateurs à la pluralité de pages courantes successives en ligne.

A l'étape E, l'opération d'accès conditionnel est notée :

- Accès conditionnel de

$$\forall\, U_i \in \{U_i\}_{i=0}^{K} \text{ à } \{HTML_y\}_{y=1}^{Y}$$

Bien entendu, l'accès conditionnel précité est réalisé à partir d'identifiants de chacun des terminaux utilisateurs lors de la tentative d'accès et, bien entendu, de la présentation du code d'identification de la session IDS, ainsi qu'il sera décrit ultérieurement dans la description.

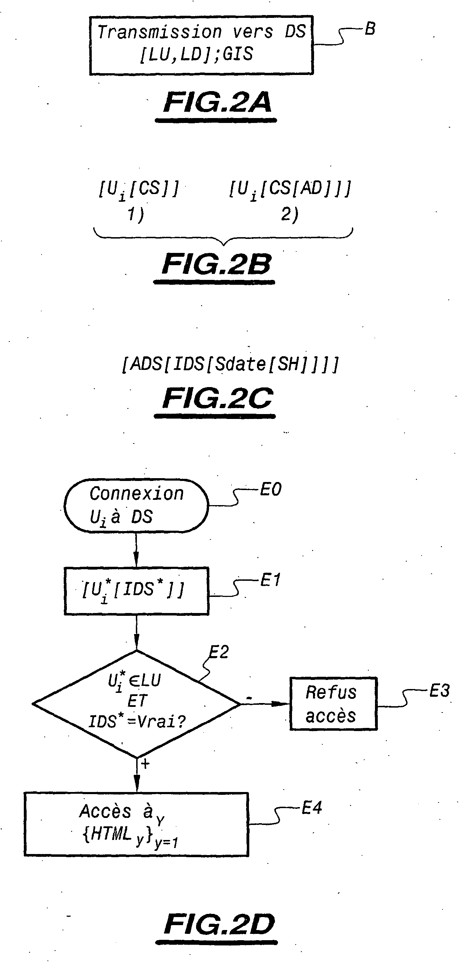

Selon un aspect plus particulier de mise en oeuvre du procédé objet de la présente invention, l'étape B consistant à initialiser comprend, en outre, la communication au serveur dédié DS d'informations générales concernant la session. Cette opération est représentée en figure 2A, sur laquelle la transmission, à l'étape B, vers le serveur dédié DS, comprend non seulement la transmission des listes LU d'utilisateurs invités et LD de documents sélectionnés, mais également d'informations générales, notées GIS, concernant la session précitée.

A titre d'exemple non limitatif, on indique que les informations générales peuvent comporter le thème de la session, la durée prévisible de la session, une liste de noms d'intervenants à la session, une liste des thèmes d'intervention de ces derniers par exemple.

En outre, et selon un aspect particulièrement remarquable du procédé objet de la présente invention, l'étape consistant à initialiser comprend, en outre, l'attribution par l'utilisateur organisateur $U_0$ de droits spécifiques d'intervention à chacun des terminaux utilisateurs invités $\{U_i\}_{i \neq 0}$.

Les droits spécifiques d'intervention comportent au moins le droit de consultation simple, noté CS, de chaque page $HTML_y$ successive ou le droit de consultation et d'adjonction de documents électroniques diffusés au cours de la session.

Dans ce but, ainsi que représenté en figure 2B à titre d'exemple non limitatif, à chaque élément de la liste LU, c'est-à-dire à chaque identificateur d'utilisateur $U_i$, peut être ajoutée une variable liée CS correspondant à un code de droit de consultation simple, telle que représentée au point 1) de la figure 2B, ou le cas échéant, une autre variable liée, telle que représentée au point 2) de la figure 2B, cette autre variable liée, définie par [CS[AD]] correspondant à la définition du droit de consultation CS et d'adjonction AD de documents électroniques diffusés au cours de la session.

Le codage des droits spécifiques d'intervention selon le droit de consultation simple ou le droit de consultation et d'adjonction tel que représenté en figure 2B est donné à titre d'exemple, toute forme de codage différente pouvant être envisagée.

Une description plus détaillée de l'étape consistant à autoriser l'accès au serveur dédié DS par chacun des terminaux utilisateurs invités sera maintenant décrite en liaison avec les figures 2C et 2D.

Sur la figure 2C, on a représenté, à titre d'exemple non limitatif, une forme particulière du message de transmission IMS envoyé par le serveur dédié DS à chacun des terminaux utilisateurs à l'étape D.

Ce message comporte, entre autre, le code d'identification de la session IDS, lequel peut être extrait au niveau de chaque terminal utilisateur $U_i$.

L'étape E peut alors, à titre d'exemple non limitatif, être mise en oeuvre de manière plus spécifique, ainsi que représenté en figure 2D.

Lors de la participation à la session considérée de code IDS, c'est-à-dire lors de la connexion du terminal utilisateur $U_i$ au serveur DS, à l'étape $E_0$, les paramètres d'identification de l'utilisateur $U_i$ et d'identification de la session IDS sont également transmis, les valeurs transmises étant notées U*, et IDS* respectivement et détectés, à l'étape $E_1$, au niveau du serveur dédié DS.

Ensuite, une étape conditionnelle d'authentification du terminal utilisateur invité $U_i$ considéré est réalisée à l'étape $E_2$, cette étape d'authentification étant effectuée vis-à-vis du serveur dédié.

A titre d'exemple non limitatif, l'authentification précitée peut comprendre la vérification de l'appartenance des paramètres d'identification transmis à la liste LU reçue lors de l'initialisation par le serveur dédié DS, puis la vérification à la valeur vraie du code d'identification de la session IDS par comparaison de la valeur de code d'identification IDS* transmise à l'étape $E_1$ vis-à-vis du code d'identification de la session d'origine IDS mémorisé au niveau du serveur dédié DS.

Sur réponse négative au test d'authentification $E_2$, une étape $E_3$ de refus d'accès au terminal utilisateur $U_i$ est appelée. Au contraire, sur réponse positive au test d'authentification $E_2$, l'étape $E_4$ d'accès à l'ensemble des pages

$\{HTML_y\}_{y=1}^{Y}$ est alors appelée pour le terminal utilisateur $U_i$ dans le cadre de la session considérée.

Bien entendu, les opérations de vérification de code d'identification utilisateur et de code d'identification de la session peuvent être réalisées de la manière la plus appropriée, ces manières correspondant à des opérations classiques pouvant impliquer des opérations de chiffrement/déchiffrement ou de vérification de signature par exemple.

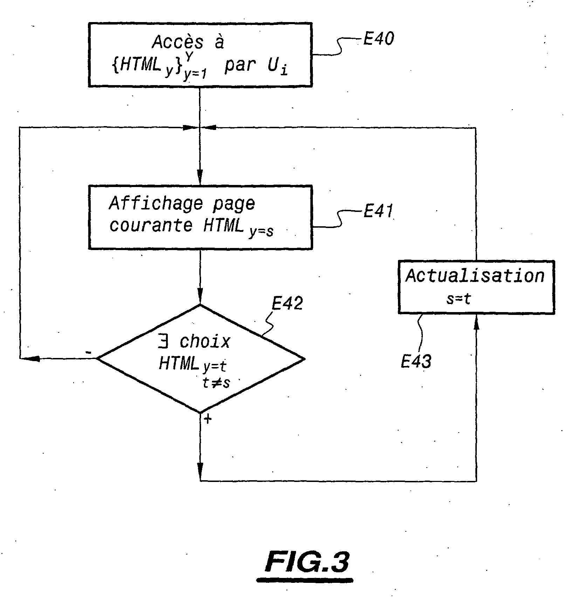

Enfin, une description plus détaillée du processus de visualisation automatique et simultanée de la même page HTML courante par l'ensemble des utilisateurs invités et/ou utilisateur organisateur sera maintenant donnée en liaison avec la figure 3.

A titre d'exemple non limitatif, la figure 3 représente un détail du processus d'accès à l'ensemble des pages HTML définies à l'étape $E_4$ de la figure 2D.

Le processus général représenté en figure 3 est mis en oeuvre pour l'un au moins des terminaux utilisateurs invités et, bien entendu, pour le terminal utilisateur organisateur pour assurer l'accès à la pluralité de pages courantes successives en ligne selon un accès synchronisé, dont l'accès a été accepté, visualise automatiquement et simultanément la même page HTML de la pluralité de pages courantes successives au format unique HTML en ligne.

Il en est de même pour le terminal utilisateur organisateur.

Selon un aspect remarquable du procédé objet de la présente invention, la visualisation automatique et simultanée de la même page HTML de la pluralité de pages courantes $\{HTML_y\}_{y=1}^{Y}$ au format unique HTML en ligne est menée à l'initiative de chacun des terminaux utilisateurs organisateur et/ou invités. Chaque participant à la session est ainsi habilité à mener et/ou à changer la page HTML courante affichée sur chaque terminal utilisateur participant à la session.

Ainsi, en référence à la figure 3, on indique que le processus d'affichage et de visualisation automatique et simultanée est décrit pour tout terminal utilisateur d'indice i̲ quelconque de l'ensemble des utilisateurs invités ou de l'utilisateur organisateur.

Lorsque l'accès à l'ensemble des pages HTML précité a été réalisé suite à l'accès conditionnel autorisé, à l'étape $E_{40}$, en fonction des droits de consultation attribués à l'utilisateur $U_i$ considéré, droit de consultation simple ou droit de consultation et d'adjonction de documents électroniques diffusés au cours de la session, on considère, à titre d'exemple non limitatif, lors de l'accès du premier terminal utilisateur, c'est-à-dire l'un quelconque des terminaux utilisateurs invités ou organisateur, l'affichage d'une page d'accueil, par exemple, pour la session, la page d'accueil permettant, à titre d'exemple non limitatif, d'afficher les informations générales transmises telles que décrites précédemment dans la description.

Lorsque, au contraire, la session est déjà commencée et que l'accès par le terminal utilisateur $U_i$ est postérieur au début de l'ouverture de la session par l'utilisateur organisateur, la page HTML affichée est la page HTML courante.

Dans tous les cas, cette opération d'affichage est représentée à l'étape $E_{41}$ de la figure 3. La page affichée est soit la page d'accueil, soit une page courante déjà introduite par l'utilisateur organisateur ou, le cas échéant, l'un des utilisateurs invités.

Au cours du déroulement de la session, chaque utilisateur invité et/ou organisateur et, en particulier, le terminal de ce dernier, vérifie la conformité de l'affichage de la page HTML courante vis-à-vis de la page HTML affichée choisie soit par l'utilisateur organisateur $U_0$ ou l'un des utilisateurs invités $U_i$, chacun des ces utilisateurs pouvant, sur requête, adresser au serveur dédié DS l'affichage d'une page HTML spécifique.

L'interrogation pour la discrimination d'un tel choix par chacun des terminaux utilisateurs $U_i$ est alors avantageusement exécutée par l'intermédiaire d'une interrogation périodique du serveur dédié DS par chacun des terminaux utilisateurs organisateur et/ou invités.

Un test d'existence d'un choix différent d'affichage de pages HTML spécifiques est réalisé à l'étape $E_{42}$, ce test étant noté :

$$- \quad \exists \text{ choix } \begin{array}{c} HTML_{y=t} \\ t \neq s \end{array}$$

Sur réponse négative au test de choix $E_{42}$ précité, l'affichage de la page HTML courante $HTML_{y=s}$ est maintenue.

Au contraire, sur réponse positive au test de choix $E_{42}$, une actualisation de l'affichage de la page HTML au niveau du terminal de l'utilisateur $U_i$ est effectuée à l'étape $E_{43}$. L'actualisation précitée est effectuée par une transaction entre le terminal utilisateur $U_i$ considéré, terminal invité ou terminal organisateur, avec le serveur dédié DS, ainsi qu'il sera décrit ultérieurement dans la description.

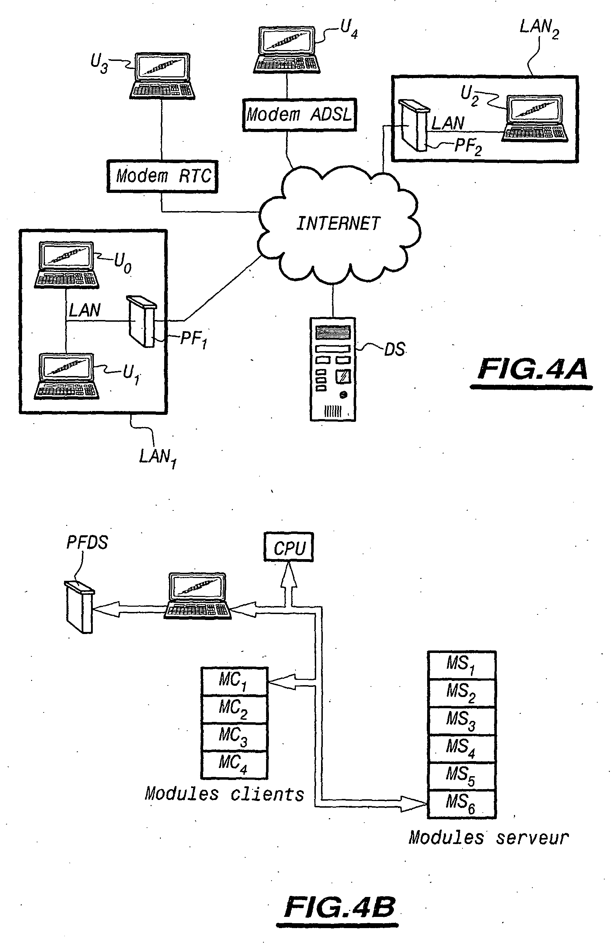

Une description plus détaillée d'un système de diffusion automatique et simultanée de documents électroniques de formats distincts sur Internet entre différents utilisateurs de terminaux connectés par l'intermédiaire de réseaux d'accès distincts, conforme à l'objet de la présente invention, sera maintenant donnée en liaison avec les figures 4A et 4B.

La figure 4A a pour objet d'illustrer l'architecture d'un système de diffusion conforme à l'objet de la présente invention.

Ainsi que représenté sur la figure précitée, l'ensemble des utilisateurs participant à une session comprend un utilisateur organisateur $U_0$ et quatre utilisateurs invités dont les terminaux sont notés $U_1$ à $U_4$.

L'ensemble des utilisateurs est connecté sur le réseau à l'Internet par l'intermédiaire de fournisseurs d'accès à Internet non représenté aux dessins.

A titre d'exemple non limitatif, l'utilisateur organisateur $U_0$ et l'utilisateur invité $U_1$ se situent dans une même entreprise et sont connectés en réseau local $LAN_1$ avec un pare-feu $PF_1$ protégeant le réseau d'entreprise de l'Internet.

De la même façon, l'utilisateur invité $U_2$ est connecté à Internet par l'intermédiaire d'un pare-feu $PF_2$ et d'un réseau local $LAN_2$.

Enfin, les utilisateurs invités $U_3$ et $U_4$ sont directement connectés à l'Internet via leur fournisseur d'accès non représenté, mais utilisent, à titre d'exemple non limitatif, un modem RTC respectivement un modem à haut débit ADSL par exemple.

On considère que les pare-feux ont des ports standard HTTP ouverts, ce qui correspond au cas le plus général pour tous les pare-feux.

En ce qui concerne le serveur dédié DS, on indique que celui-ci constitue en fait une plate-forme de services permettant d'exécuter l'ensemble des transactions entre chaque terminal d'utilisateur organisateur et/ou invité à partir de transactions du type client/serveur.

Ainsi que représenté en figure 4B, le serveur dédié DS est constitué par un ordinateur connecté au réseau Internet par un pare-feu spécifique, noté PFDS, l'ordinateur et son unité centrale de traitement CPU étant munis de modules logiciel spécifiques catégorisés en modules client, notés $MC_1$ à $MC_4$, et modules serveur notés $MS_1$ à $MS_6$.

De manière classique, chaque module logiciel, module client respectivement module serveur, peut être mémorisé de manière la plus adaptée soit en mémoire morte, le cas échéant reprogrammable, soit sur un disque de sauvegarde et rechargé en mémoire de travail, selon les besoins, en fonction des accès successifs à la plate-forme de services ainsi constituée.

D'une manière générale, on indique que les modules logiciel client sont des modules logiciel qui, suite à l'accès de tout utilisateur $U_i$, utilisateur organisateur $U_0$ ou utilisateurs invités sont exécutés à l'initiative de ces derniers, l'ensemble des modules logiciel client étant toutefois implanté au niveau de la plate-forme de services et du serveur dédié DS.

A titre d'exemple non limitatif, les modules logiciel client présentent les fonctions ci-après :

- $MC_1$ : module de présentation des documents ;
- $MC_2$ : module de transfert des documents ;
- $MC_3$ : module de synchronisation des pages HTML ;
- $MC_4$ : module de gestion des réunions.

En ce qui concerne les modules logiciel serveur, ceux-ci, implantés au niveaux de la plate-forme de services, sont exécutés à l'initiative du serveur dédié DS ou, le cas échéant, en réponse à toute demande émanant de l'un des utilisateurs, organisateur et/ou invités.

A titre d'exemple non limitatif, on indique que les modules logiciel serveur comportent les fonctions ci-après :

- $MS_1$ : module de gestion des droits d'accès aux réunions ;
- $MS_2$ : module de synchronisation des pages HTML;
- $MS_3$ : module de réception de documents aux formats divers ;
- $MS_4$ : module de transformation de documents au format HTML ;
- $MS_5$ : module de gestion des utilisateurs invités et des sessions ;
- $MS_6$ : module d'accès aux pages HTML et aux documents déposés.

Les différentes fonctions des modules logiciel client et serveur seront maintenant données ci-après :

**Modules clients**

- <u>$MC_1$ : Module de présentation des documents</u> :

Le module précité permet à tout utilisateur organisateur $U_0$ de sélectionner les documents qu'il souhaite diffuser au cours de la session, ces documents étant sélectionnés et mémorisés dans leur format d'origine en vue de leur transmission au serveur dédié DS.

- <u>$MC_2$ : Module de transfert des documents</u> :

Le module de transfert des documents réalise le conditionnement et le transfert des documents sélectionnés dans leur format d'origine vers le serveur dédié DS à partir du terminal de l'utilisateur organisateur $U_0$. Enfin, le module $MC_2$ de transfert des documents permet, après déclaration d'une réunion, à l'utilisateur organisateur et à ceux des utilisateurs invités qui se sont vu attribuer les droits de consultation et d'adjonction, tel que décrit précédemment en liaison avec la figure 2B, de transférer des documents électroniques à diffuser soit avant le déroulement de la session ou de la réunion, soit au cours du déroulement de celle-ci.

- MC$_3$ : Module de synchronisation des pages HTML :

Ce module réalise la synchronisation des pages HTML, ainsi que décrit en liaison avec la figure 3. Il réalise, en particulier, l'étape de test de choix au niveau de chaque terminal utilisateur invité et/ou organisateur, étape E$_{42}$, cette étape de choix étant décrite ultérieurement dans la description. En particulier, le module logiciel client précité gère également l'étape E$_{43}$ d'actualisation de la page HTML à afficher au niveau du terminal utilisateur considéré.

- MC$_4$ : Module de gestion des réunions :

Ce module est un module de gestion des réunions. Il permet, en particulier, non seulement la définition des listes utilisateurs invités LU et des listes de documents LD telles que constituées à l'étape A mais également d'assurer la constitution des informations générales relatives à la session GIS et, finalement, toute opération administrative pour l'organisation des réunions ou sessions par l'utilisateur organisateur.

**Modules serveur**

- MS1 : Module de gestion des droits d'accès aux réunions :

Le module précité permet de discriminer les droits spécifiques d'intervention alloués à chaque utilisateur invité, c'est-à-dire droit de consultation simple ou droit de consultation et d'adjonction de documents à partir des informations transmises à l'étape B de la figure 1 et de la figure 2B.

Le module précité permet de lire les champs des variables relatives aux droits codés précédemment cités, que ceux-ci soient codés sous forme de liste ou autres.

- MS$_2$ : Module de synchronisation des pages HTML :

Suite à la connexion d'un ou plusieurs utilisateurs organisateur et/ou invités, le module précité a pour fonction de synchroniser automatiquement tous les navigateurs équipant les terminaux utilisateurs connectés et participant à la session. Le module précité permet d'assurer, en particulier, automatiquement tout changement de page HTML à afficher, suite à la requête d'un utilisateur participant à la réunion, ainsi que décrit précédemment dans la description en liaison avec la figure 3. Une description plus détaillée du mode opératoire pour assurer le changement de l'affichage de la page HTML courante, au niveau du serveur dédié DS, par l'intermédiaire du module MS$_2$ précité sera donnée ultérieurement dans la description.

- MS$_3$ : Module de réception de documents aux formats divers :

Le module de réception de documents est un module normalement disponible dans le commerce. Il permet d'assurer, suite à la transmission des fichiers électroniques à diffuser, la mémorisation et la sauvegarde de ces derniers dans une base de données temporaire permettant, toutefois, l'archivage des documents précités. Le mode opératoire d'un tel module de réception ne sera pas décrit en détail.

- MS$_4$ : Module de transformation de documents au format HTML :

Ce module logiciel serveur est un module normalement disponible dans le commerce et peut consister, par exemple, en un module "Purepage" commercialisé par la société Inzone Software (NZ). Ce type de logiciel permet de transformer plus de 200 formats de fichiers en pages HTML et, en particulier, les fichiers au standard Microsoft®, fichier Image, fichier Lotus®, etc. Dès que la transformation de l'ensemble des fichiers est effectuée, les pages HTML et l'ensemble des pages $\{\mathrm{HTML_y}\}_{y=1}^{Y}$ est automatiquement mis en ligne sur le site du serveur dédié DS.

- MS$_5$ : Module de gestion des utilisateurs invités et des sessions :

Le module précité permet d'assurer la gestion de la liste des invités aux réunions ou sessions. A titre d'exemple non limitatif, on indique que le module serveur précité permet d'assurer la discrimination entre utilisateur organisateur et utilisateurs invités pour permettre ensuite un contrôle d'accès adapté en fonction de la qualité de ces derniers.

- <u>MS$_6$</u> : Module d'accès aux pages HTML et aux documents déposés:

Ce module permet d'assurer l'accès à l'ensemble des pages HTML et aux documents déposés. Dans un mode de réalisation non limitatif, le module précité permet d'allouer, à chaque page HTML$_y$ appartenant à l'ensemble des pages à diffuser, une référence <u>y</u> comportant un numéro d'ordre successif. Selon une caractéristique avantageuse du procédé et du système objets de l'invention, on indique que chaque numéro d'ordre est en correspondance biunivoque avec l'adresse de la page HTML$_y$ correspondante sur le site du serveur dédié DS.

L'utilisation du système objet de la présente invention, tel que représenté en figures 4A et 4B est alors la suivante :

Dans un premier temps, l'utilisateur organisateur U$_0$ initialise la réunion ou session selon les étapes précédemment décrites en figures 1 et suivantes de la description. En particulier :

- il se connecte au serveur dédié DS par l'intermédiaire d'un simple navigateur de type classique mettant en oeuvre le protocole HTTP ;
- il introduit alors les informations générales GIS concernant la réunion objet de la réunion, horaire, etc., ainsi que décrit précédemment ;
- il renseigne les noms, prénoms et adresse électronique des utilisateurs invités participant à la session et il indique les droits de consultation attribués à ces derniers dans le cadre de la session précitée. Cette opération correspond à la constitution des listes LU et LD précédemment mentionnées dans la description.

Chacun des utilisateurs invités U$_i$ est alors automatiquement invité à la réunion par la transmission d'un message d'invitation, par courrier électronique par exemple.

Lorsque les documents à diffuser et la liste des utilisateurs invités a été transmise au serveur dédié DS, les opérations précédentes étant exécutées sur le serveur dédié DS ou sur la plate-forme de services lorsque le serveur dédié DS et la plate-forme de services sont délocalisées, les documents transmis pour diffusion sont transformés puis mis en ligne.

Dans un deuxième temps, à la date et à l'heure d'ouverture de la session, les participants, y compris d'utilisateur organisateur, se connectent alors au serveur dédié DS et s'authentifient. Le processus d'authentification pour chaque utilisateur, c'est-à-dire utilisateur organisateur et utilisateurs invités, peut être semblable.

A titre d'exemple non limitatif, le serveur dédié DS peut, à la date et à l'heure de la session, préparer une page d'accueil proposée pour l'affichage auprès de tout utilisateur ultérieur.

Tous les utilisateurs participant à la réunion peuvent alors visualiser automatiquement et simultanément la même page HTML courante, c'est-à-dire dans un premier temps, la page d'accueil puis, successivement, à l'initiative en premier lieu de l'utilisateur organisateur par exemple, le déroulement des pages HTML courantes successives, déroulement modifié, le cas échéant, par l'intervention d'un utilisateur invité.

Ainsi, en fonction des droits donnés par l'utilisateur organisateur U$_0$ aux utilisateurs invités $\{U_i\}_{i=1}^{K}$, les invités peuvent également mener la réunion ou la session et, notamment, modifier le choix de la page HTML courante affichée sur le navigateur Internet de l'ensemble des utilisateurs participant à la réunion ou session.

Bien entendu, à tout moment au cours du déroulement de la session, un nouvel invité peut être accueilli dans le cercle des participants et chacun peut, en fonction des droits attribués par l'utilisateur organisateur ab initio, déposer de nouveaux documents pour diffusion dans le cadre de la même session.

En variante, chaque participant peut, le cas échéant, entrer ou sortir du mode synchronisé afin, si nécessaire, de pouvoir procéder à une consultation des pages HTML de l'ensemble des pages HTML soumises à diffusion, la consultation s'exerçant cette fois en mode libre. Dans un tel cas, l'activité de l'utilisateur organisateur et/ou invité qui est sorti du mode de consultation synchronisé est, dans le cadre de la session, simplement mise en sommeil et un temps limité peut, par exemple, lui être alloué pour consultation de ces documents en mode libre. En tout état de cause, la possibilité de passage en mode de consultation libre, pour l'un ou l'autre des utilisateurs, peut être gérée de la façon ci-après :

- attribution automatique du passage en mode libre pour l'utilisateur organisateur U$_0$ ;
- attribution du mode de consultation en mode libre à l'initiative de l'utilisateur organisateur pour chacun des utilisateurs invités. Dans ce but, le codage des droits tel que représenté en figure 2B peut être complété par une troisième variable liée non représentée en partie 2) de la figure 2B, cette troisième variable liée correspondant au codage de la possibilité de passage en consultation en mode libre.

En ce qui concerne la mise en oeuvre du système objet de l'invention, on indique que l'équipement nécessaire pour la mise en oeuvre de ce dernier, au niveau de chaque utilisateur organisateur et/ou invité, consiste en un simple ordinateur, c'est-à-dire une station de travail ou terminal équipée d'un logiciel navigateur Web en l'absence d'adjonction de routine informatique désignée par "plug in" en langage anglo-saxon. Le poste de travail précité est alors simplement connecté au réseau Intranet d'une entreprise ou directement au réseau Internet, ainsi que représenté en figure 4A.

Le système objet de la présente invention ne nécessite aucun téléchargement, ni installation d'un autre logiciel. Enfin, les modules logiciel client, tels que décrits en figure 4B, sont, de préférence, tous implantés au niveau de la plate-forme de services par exemple ou, le cas échéant, du serveur dédié DS et peuvent être exécutés chacun au niveau de chaque terminal utilisateur invité.

Alors que tous les systèmes d'exploitation et les types de connexion au réseau peuvent être utilisés pour la mise en oeuvre du système objet de la présente invention, l'ensemble du service fonctionne sur de faibles débits et est, bien entendu, accessible en tous points du réseau Internet.

Enfin, les documents présentés pour diffusion, transformés en pages HTML, sont mis en ligne sur le serveur dédié DS implanté dans le réseau en un endroit quelconque et permettent ainsi d'éviter les intrusions sur le poste de travail de l'utilisateur organisateur $U_0$ alors, qu'au contraire, tout utilisateur invité est en mesure de déposer de nouveaux documents en cours de réunion, pourvu que les droits de consultation correspondants lui aient été attribués.

On comprend ainsi que le système et le procédé objets de la présente invention peuvent permettre également d'assurer l'exécution de transactions multiples entre les divers terminaux utilisateurs organisateur et/ou invités, le serveur dédié DS pouvant se voir conférer, en particulier, l'autorité d'un tiers de confiance habilité à recevoir le dépôt des fichiers électroniques à diffuser, ce qui permet ainsi d'assurer la mise en oeuvre de transactions électroniques entre parties ayant des intérêts opposés à défendre, bien que, bien entendu, ces parties participent à la même session ou réunion.

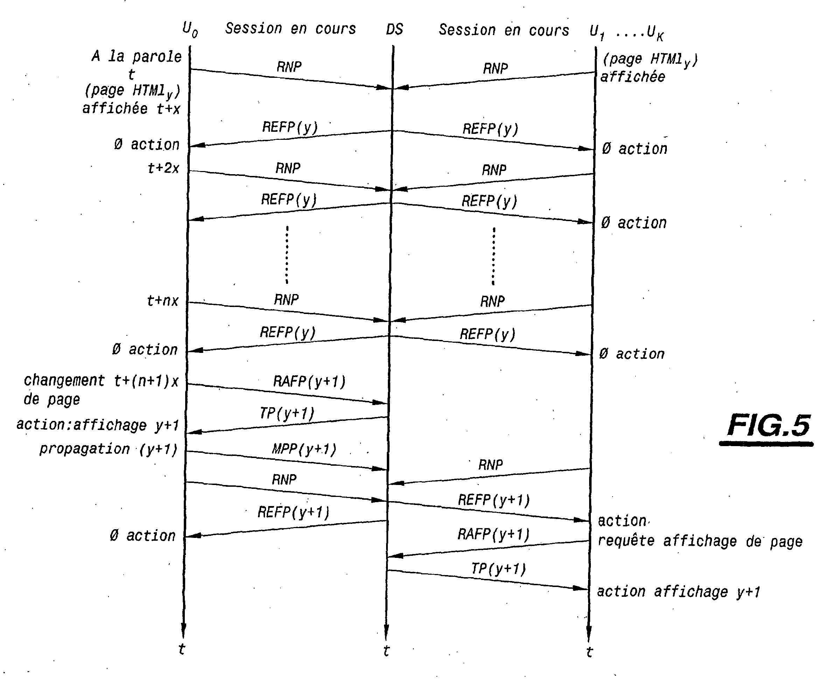

Une description plus détaillée d'un procédé d'affichage simultané d'une page HTML courante, à partir d'un ensemble de pages HTML en ligne, sur un serveur dédié, sur chacun des terminaux de différents utilisateurs organisés en un ensemble d'utilisateurs participant à une même session sera maintenant donnée en liaison avec la figure 5.

Le procédé précité peut être mis en oeuvre de manière à exécuter l'affichage simultané et synchronisé de l'ensemble des pages précitées sur tous les terminaux utilisateurs organisateur et/ou invités, à l'étape $E_4$ de la figure 2D.

Dans le cadre de la figure 5, on considère, à titre d'exemple non limitatif, la situation entre un utilisateur organisateur $U_0$ et un autre utilisateur invité $U_1$ à $U_K$.

On considère, en particulier, que l'utilisateur organisateur, par exemple, dispose de la parole dans le cadre de la session ou de la réunion et que la page HTML affichée, page HTML courante, est la page portant la référence $\underline{y}$ et un numéro d'ordre déterminé, cette page pouvant correspondre soit à la page d'accueil, soit à toute page antérieurement sélectionnée par l'utilisateur organisateur $U_0$ ou, le cas échéant, tout autre utilisateur invité.

Sur la figure 5, on indique que, entre les instants t+x de représentation des actions pour l'utilisateur organisateur $U_0$ et les utilisateurs invités $U_1$ à $U_K$, et t+nx où $\underline{x}$ représente une valeur temporelle déterminée et $\underline{n}$ un nombre indéfini quelconque, aucune action n'est entreprise par l'utilisateur organisateur $U_0$ ou par l'utilisateur invité $U_1$ à $U_K$. Dans ces conditions, chaque terminal utilisateur organisateur et/ou invité transmet des messages RNP dits de scrutation périodique comportant une requête de vérification de poursuite d'affichage de la page HTML courante de référence $\underline{y}$ sur chacun des terminaux participant à la session, c'est-à-dire pour tous les utilisateurs $U_0$ à $U_K$. Chaque message de scrutation RNP, transmis de chaque terminal utilisateur vers le serveur dédié DS, est suivi d'une réponse systématique du serveur dédié DS à chacun des terminaux utilisateurs par l'intermédiaire d'un message de réponse de poursuite d'affichage d'une page HTML déterminée.

En conséquence, entre les instants t+x à t+nx et en l'absence de tout changement ou de requête de changement d'affichage de page, le message de réponse de poursuite d'affichage d'une page HTML, message noté $REFP_{(y)}$, transmet à chacun des terminaux la référence $\underline{y}$ permettant le maintien de l'affichage de la page HTML courante de même indice $\underline{y}$ sur chacun des terminaux utilisateurs.

Chacun des terminaux utilisateurs exécute alors la procédure représentée en figure 3 et, en particulier, le test d'existence d'un choix ou d'un changement de choix d'affichage $E_{42}$. La poursuite de l'affichage de la page HTML de référence $\underline{y}$ est notée $\varnothing$ action.

Au contraire, lorsqu'un terminal utilisateur souhaite procéder à un changement d'affichage de page HTML, le procédé objet de l'invention représenté en figure 5 consiste, pour tout terminal utilisateur demandeur, c'est-à-dire à titre d'exemple sur la figure 5, pour le terminal utilisateur organisateur $U_0$, à l'instant t+(n+1)x, à transmettre, à l'initiative de ce terminal utilisateur demandeur vers le serveur dédié DS, une requête d'affichage d'une page HTML courante distincte de la précédente par l'intermédiaire d'une requête d'affichage désignée RAFP portant, par exemple, la référence y+1 pour obtenir la page suivante, puis à transmettre, du serveur dédié DS vers le terminal utilisateur demandeur, le terminal organisateur $U_0$, la page $HTML_{(y+1)}$ par un message de transmission de page noté $TP_{(y+1)}$.

Au niveau du terminal utilisateur demandeur, terminal organisateur $U_0$, l'action consiste alors à afficher la page HTML dont la référence est y+1 et qui vient d'être reçue.

L'opération d'affichage précitée est alors suivie par une opération consistant à transmettre, du terminal utilisateur demandeur, le terminal organisateur $U_0$, vers le serveur dédié DS, un message de propagation d'affichage simultané de la page HTML courante de référence y+1 vis-à-vis des autres terminaux utilisateurs participant à la session. Le message de propagation d'affichage est noté $MPP_{(y+1)}$. On comprend, en particulier, que le message de propagation d'affichage simultané de la page HTML courante de référence y+1 constitue également un accusé de réception par le terminal utilisateur organisateur $U_0$ de la page HTML précitée transmise par le message $TP_{(y+1)}$.

Le processus d'affichage simultané est alors repris par l'intermédiaire des autres terminaux utilisateurs non demandeurs, c'est-à-dire les terminaux utilisateurs autres que le terminal organisateur $U_0$, soit les terminaux utilisateurs invités $U_1$ à $U_K$.

Ce processus est, bien entendu, réalisé par l'intermédiaire des messages de scrutation périodique, lesquels sont transmis par chacun des terminaux précités, c'est-à-dire non seulement par les terminaux invités $U_1$ à $U_K$, terminaux non demandeurs de changement d'affichage, mais également par le terminal demandeur d'affichage, terminal utilisateur organisateur $U_0$.

Bien entendu, le message de réponse REFP comporte alors la référence à la page HTML à afficher, c'est-à-dire la référence y+1 confirmée par le message de propagation antérieur $MPP_{(y+1)}$.

Lorsque le message de réponse REFP de poursuite d'affichage d'une page HTML comporte une référence de page HTML à afficher identique à celle de la référence de la page HTML courante affichée sur le terminal récepteur du message, ce qui est le cas pour le terminal utilisateur demandeur, c'est-à-dire le terminal utilisateur organisateur $U_0$, la réception par ce dernier du message de poursuite d'affichage $REFP_{(y+1)}$ n'est suivie d'aucune action, puisque, bien entendu, la page HTML de référence y+1 est déjà affichée. Ainsi, l'affichage de la page HTML courante est alors maintenu.

Au contraire, lorsque le message de réponse de poursuite d'affichage d'une page HTML comporte une référence de page HTML à afficher distincte de celle de la référence de la page HTML courante, ce qui est le cas pour les terminaux utilisateurs non demandeurs, terminaux utilisateurs U1 à UK immédiatement après l'instant t+(n+2)x sur la figure 5, chacun des terminaux non demandeurs, terminaux utilisateurs invités $U_1$ à $U_K$, transmet alors un message de requête d'affichage de page HTML pour la référence y+1, ainsi que représenté sur la figure 5, vers le serveur dédié DS. Le serveur dédié précité transmet, en réponse à chacun des terminaux $U_1$ à $U_K$ non demandeurs, terminaux utilisateurs invités, un message de page HTML $TP_{(y+1)}$. L'action entreprise au niveau de chacun des terminaux utilisateurs invités non demandeurs $U_1$ à $U_K$ consiste alors en un affichage de la page HTML reçue de référence y+1.

En ce qui concerne le mode opératoire de la synchronisation de l'affichage des pages HTML précité, on indique que la notion de synchronisation correspond à celle d'une synchronisation factuelle et non pas temporelle de l'affichage effectif de chaque page HTML courante sur l'ensemble des terminaux utilisateurs en raison du caractère asynchrone des transmissions entre chacun des terminaux utilisateurs et le serveur dédié DS.

En particulier, on comprend que, à chaque page HTML de l'ensemble de pages HTML en ligne, est attribué un numéro de référence, la référence y ou y+1 sur la figure 5, laquelle comporte un numéro d'ordre unique en correspondance biunivoque avec l'adresse de la page HTML sur le site du serveur dédié, ainsi que mentionné précédemment dans la description.

Ce mode opératoire permet de gérer l'accès par chacun des terminaux utilisateurs organisateur ou invités en fonction des droits de consultation simple respectivement des droits de consultation et d'adjonction des documents électroniques diffusés par l'un des terminaux utilisateurs. En particulier, à chaque page HTML issue de l'adjonction de documents électroniques ajoutés, que ce soit préalablement à l'ouverture de la session ou séance de réunion ou pendant celle-ci, est affectée une référence comportant un numéro d'ordre successif.

Ce mode opératoire permet ainsi d'assurer une consultation en synchronisme et de manière automatique des pages HTML affichées pour l'ensemble des utilisateurs participant à la session considérée.

D'une manière pratique, on indique que, pour chaque terminal utilisateur, les messages de scrutation périodique RNP peuvent être émis par chacun des ces terminaux participant à la session dans une plage de périodes comprise entre 3 secondes et 2 minutes.

Bien entendu, au niveau de chaque terminal utilisateur, la détection du changement de page à afficher peut être réalisée, ainsi que représenté en figures 3 et 5, grâce aux transactions entre terminal utilisateur et serveur dédié DS pour réaliser les transactions nécessaires au changement de l'affichage de page.

**Revendications**

1. Procédé de diffusion automatique et simultanée de documents électroniques de formats distincts sur Internet entre différents utilisateurs de terminaux connectés par l'intermédiaire de réseaux d'accès distincts, au cours d'une session commune consistant en un accès commun à un serveur dédié à ladite session, ce procédé consistant :

   a) à initialiser ladite session, à l'initiative de l'un des utilisateurs de terminaux, organisateur de ladite session, l'étape consistant à initialiser comprenant au moins, suite à une connexion du terminal dudit utilisateur organisateur audit serveur dédié, l'établissement d'une liste de noms, prénoms et adresse électronique des autres utilisateurs invités à ladite session et la sélection des documents électroniques à diffuser au cours de ladite session ;

b) à transmettre, dudit terminal de l'utilisateur organisateur vers ledit serveur dédié, l'ensemble des documents électroniques à diffuser selon leur format distinct d'origine accompagné de la liste des autres utilisateurs invités ; et au niveau dudit serveur dédié,

c) à transformer chacun des documents électroniques à diffuser en une pluralité de pages courantes successives en un format unique HTML et à mettre en ligne lesdites pages successives sur le site Internet dudit serveur dédié ;

d) à transmettre, par l'intermédiaire dudit serveur dédié, au moins vers chacun desdits terminaux utilisateurs invités, un message d'invitation de participation à ladite session, ledit message d'invitation comportant au moins l'adresse du site dudit serveur dédié et la date et l'heure de ladite session, et suite à la connexion de l'un au moins desdits terminaux utilisateurs organisateur et/ou invités audit serveur dédié pendant la dite session,

e) à autoriser conditionnellement l'accès de chacun desdits terminaux utilisateurs à la pluralité de pages courantes successives en ligne,

2.   Procédé selon la revendication 1, dans lequel ladite étape consistant à initialiser comprend en outre la communication audit serveur dédié d'informations générales concernant la session.

3.   Procédé selon la revendication 1 ou 2, dans lequel ladite étape consistant à initialiser comprend en outre l'attribution, par l'utilisateur organisateur, de droits spécifiques d'intervention à chacun desdits terminaux utilisateurs invités, lesdits droits spécifiques d'intervention comportant au moins le droit de consultation simple ou le droit de consultation et d'adjonction de documents électroniques diffusés au cours de ladite session.

4.   Procédé selon l'une des revendications 1 à 3, dans lequel l'étape consistant à autoriser l'accès audit au moins un des terminaux utilisateurs invités comprend une étape conditionnelle d'authentification dudit au moins un des terminaux utilisateurs invités vis-à-vis dudit serveur dédié.

5.   Procédé selon l'une des revendications 1 à 4, dans lequel l'accès desdits terminaux utilisateurs invités à la pluralité de pages courantes successives en ligne est un accès synchronisé, chaque utilisateur invité autorisé dont l'accès a été accepté visualisant automatiquement et simultanément la même page HTML de ladite pluralité de pages courantes successives au format unique HTML en ligne.

6.   Procédé selon la revendication 5, dans lequel ladite visualisation automatique et simultanée de la même page HTML de ladite pluralité de pages courantes successives au format unique HTML en ligne est menée à l'initiative de chacun des terminaux utilisateurs organisateurs et/ou invités, chaque participant à ladite session étant habilité à mener et/ou à changer la page HTML affichée sur chaque terminal utilisateur participant à ladite session.

7.   Procédé selon l'une des revendications 1à 6, dans lequel l'accès de chacun des terminaux utilisateurs organisateur et invités audit serveur dédié est exécuté par chacun desdits terminaux par l'intermédiaire d'une interrogation périodique dudit serveur dédié.

8.   Système de diffusion automatique et simultanée de documents électroniques de formats distincts sur Internet entre différents utilisateurs de terminaux connectés par l'intermédiaire de réseaux d'accès distincts, au cours d'une session commune consistant en un accès commun à un serveur dédié, **caractérisé en ce qu'**il comprend au moins un serveur dédié constituant une plate-forme de services, ladite plate-forme de services comportant au moins :

- un module organisateur de session, permettant, sur appel à l'initiative de l'un des utilisateurs de terminaux, organisateur de ladite session d'initialiser ladite session, l'étape consistant à initialiser comprenant au moins, suite à une connexion du terminal dudit utilisateur organisateur audit serveur dédié, l'établissement d'une liste des noms, prénoms et adresse électronique des autres utilisateurs invités à ladite session et la sélection des documents électroniques à diffuser, au cours de ladite session,

- un module de réception et de transformation desdits documents électroniques à diffuser en une pluralité de pages courantes successives au format unique HTML,

- un module de mise en ligne de ladite pluralité de pages courantes successives au format unique HTML, au niveau du site dudit serveur dédié,

- un module de transmission de messages d'invitation de participation à ladite session vers chacun desdits terminaux utilisateurs organisateur et invités, chaque message d'invitation comportant au moins l'adresse dudit site serveur dédié et la date et l'heure de ladite session ; et

- un module de contrôle d'accès au site dudit serveur dédié par chacun des terminaux utilisateurs, ledit module de contrôle d'accès comprenant un module d'authentification de tout terminal utilisateur organisateur vis-à-vis de la plate-forme de servicess respectivement de tout terminal utilisateur organisateur et invité vis-à-vis de ladite session organisée par ledit terminal utilisateur organisateur.

**9.** Système selon la revendication 8, dans lequel chaque message d'invitation de participation à ladite session vers chacun desdits terminaux utilisateurs organisateur et invités comporte, outre l'adresse du site dudit serveur dédié, un mot de passe dédié à ladite session et à chacun des terminaux utilisateurs organisateur et invités.

**Claims**

**1.** Method for automatically and simultaneously distributing electronic documents in different formats on the Internet between different users of terminals connected via different access networks, during a common session consisting in a common access to a server dedicated to said session, said method consisting in:

  a) initializing said session at the instigation of one of the terminal users organizing said session, the initialization step, following a connection of said organizing user terminal to said dedicated server, comprising at least the drawing up of a list of names, first names and electronic addresses of the other users invited to said session, and the selection of the electronic documents to be distributed during said session;

  b) transmitting from said organizing user terminal to said dedicated server all of the electronic documents to be distributed according to their different original formats, accompanied by the list of other invited users; and, in said dedicated server,

  c) transforming each of the electronic documents to be distributed into a plurality of successive current pages in a single HTML format, and placing online said successive pages on the Internet site of said dedicated server;

  d) transmitting, via said dedicated server, at least to each of said invited user terminals, an invitation message to participate in said session, said invitation message comprising at least the address of the site of said dedicated server and the date and time of said session, and, following the connection of at least one of said organizing and/or invited user terminals to said dedicated server during said session,

  e) conditionally authorizing access by each of said user terminals to the plurality of successive current pages online.

**2.** Method according to Claim 1, **characterized in that** said initialization step furthermore comprises the communication to said dedicated server of general information relating to the session.

**3.** Method according to Claim 1 or 2, **characterized in that** said initialization step furthermore comprises the allocation, by the organizing user, of specific intervention rights to each of said invited user terminals, said specific intervention rights comprising at least the right to simple consultation or the right to consultation and addition of electronic documents distributed during said session.

**4.** Method according to one of Claims 1 to 3, **characterized in that** the step entailing authorization of access to said at least one of the invited user terminals comprises a step entailing conditional authentication of said at least one of the invited user terminals vis-à-vis said dedicated server.

**5.** Method according to one of Claims 1 to 4, **characterized in that** the access of said invited user terminals to the plurality of successive current pages online is a synchronized access, each authorized invited user whose access has been accepted automatically and simultaneously visualizing the same HTML page of said plurality of successive current pages in the single HTML format online.

**6.** Method according to Claim 5, **characterized in that** said automatic and simultaneous visualization of the same HTML page of said plurality of successive current pages in the single HTML format online is performed at the instigation of each of the organizing and/or invited user terminals, each participant in said session being authorized to control and/or change the HTML page displayed on each user terminal participating in said session.

**7.** Method according to one of Claims 1 to 6, **characterized in that** the access of each of the organizing and invited user terminals to said dedicated server is carried out by each of said terminals through periodic polling of said dedicated server.

**8.** System for automatically and simultaneously distributing electronic documents in different formats on the Internet between different users of terminals connected via different access networks, during a common session consisting in a common access to a dedicated server, **characterized in that** it comprises at least one dedicated server constituting a service platform, said service platform comprising at least:

- a session-organizing module, enabling, in response to the instigation of one of the terminal users organizing said session, initialization of said session, the initialization step, following a connection of the terminal of said organizing user to said dedicated server, comprising at least the drawing up of a list of names, first names and electronic addresses of the other users invited to said session, and selection of the electronic documents to be distributed during said session,
- a module for receiving and transforming said electronic documents to be distributed into a plurality of successive current pages in a single HTML format,
- a module for placing online said plurality of successive current pages in the single HTML format, on the site of said dedicated server,
- a module for transmitting invitation messages to participate in said session to each of said organizing and invited user terminals, each invitation message comprising at least the address of said dedicated server site and the date and time of said session; and
- a module for controlling access to the site of said dedicated server by each of the user terminals, said access control module comprising a module for authenticating each organizing user terminal vis-à-vis the service platform, or each organizing and invited user terminal vis-à-vis said session organized by said organizing user terminal.

9. System according to Claim 8, **characterized in that** each invitation message to participate in said session sent to each of said organizing and invited user terminals comprises, in addition to the address of the site of said dedicated server, a password dedicated to said session and to each of the organizing and invited user terminals.

## Patentansprüche

1. Verfahren zur automatischen und gleichzeitigen Verteilung von elektronischen Dokumenten unterschiedlicher Formate im Internet zwischen verschiedenen Benutzern von Endgeräten, die über unterschiedliche Zugriffsnetze verbunden sind, während einer gemeinsamen Sitzung, die aus einem gemeinsamen Zugriff zu einem für die Sitzung dedizierten Server besteht, wobei dieses Verfahren darin besteht:

a) die Sitzung auf Initiative eines der Endgeräte-Benutzer, der der Organisator der Sitzung ist, zu initialisieren, wobei der Schritt der Initialisierung nach einer Verbindung des Endgeräts des Organisator-Benutzers mit dem dedizierten Server mindestens die Erstellung einer Liste von Namen, Vornamen und elektronischer Adresse der anderen zur Sitzung eingeladenen Benutzer und die Auswahl der während der Sitzung zu verteilenden elektronischen Dokumente enthält;
b) vom Endgerät des Organisator-Benutzers zum dedizierten Server die Gesamtheit der zu verteilenden Dokumente entsprechend ihrem unterschiedlichen Ursprungsformate zusammen mit der Liste der anderen eingeladenen Benutzer zu übertragen; und auf der Ebene des dedizierten Servers,
c) jedes der zu verteilenden elektronischen Dokumente in mehrere aufeinanderfolgende laufende Seiten in einem einzigen HTML-Format umzuwandeln und die aufeinanderfolgenden Seiten auf der Website des dedizierten Servers online zur Verfügung zu stellen;
d) über den dedizierten Server mindestens an jedes der eingeladenen Benutzer-Endgeräte eine Einladungsmitteilung zur Teilnahme an der Sitzung zu übertragen, wobei die Einladungsmitteilung mindestens die Adresse der Website des dedizierten Servers und das Datum und die Uhrzeit der Sitzung enthält, und nach der Verbindung mindestens eines der Endgeräte, des Organisator-Benutzers und/oder der eingeladenen Endgeräte, mit dem dedizierten Server während der Sitzung
e) bedingt den Zugriff jedes der Benutzer-Endgeräte zu den mehreren online verfügbaren aufeinanderfolgenden laufenden Seiten zu erlauben.

2. Verfahren nach Anspruch 1, bei dem der aus der Initialisierung bestehende Schritt außerdem die Übermittlung von die Sitzung betreffenden allgemeinen Informationen an den dedizierten Server enthält.

3. Verfahren nach Anspruch 1 oder 2, bei dem der aus der Initialisierung bestehende Schritt außerdem die Zuweisung spezifischer Eingriffsrechte an jedes der eingeladenen Benutzer-Endgeräte bei dem Benutzer-Organisator enthält, wobei die spezifischen Eingriffsrechte mindestens das Recht der einfachen Abfrage oder das Recht der Abfrage und des Anhängens von elektronischen Dokumenten enthält, die während der Sitzung verteilt werden.

4. Verfahren nach einem der Ansprüche 1 bis 3, bei dem der Schritt der Zugriffs-Autorisierung mindestens eines der eingeladenen Benutzer-Endgeräte einen bedingten Schritt der Authentifizierung des mindestens einen der eingeladenen Benutzer-Endgeräte gegenüber dem dedizierten Server enthält.

5. Verfahren nach einem der Ansprüche 1 bis 4, bei dem der Zugriff der eingeladenen Benutzer-Endgeräte auf die online verfügbaren mehreren aufeinanderfolgenden laufenden Seiten ein synchronisierter Zugriff ist, wobei jeder autorisierte eingeladene Benutzer, dessen Zugriff akzeptiert wurde, automatisch und gleichzeitig die gleiche HTML-Seite der mehreren aufeinanderfolgenden laufenden Seiten im einzigen HTML-Online-Format anzeigt.

6. Verfahren nach Anspruch 5, bei dem die automatische und gleichzeitige Anzeige der gleichen HTML-Seite der mehreren aufeinanderfolgenden laufenden Seiten im einzigen HTML-Online-Format auf Initiative jedes der Endgeräte, des Organisator-Benutzers und/oder der eingeladenen Benutzer, durchgeführt wird, wobei jeder Teilnehmer an der Sitzung befugt ist, die auf jedem an der Sitzung teilnehmenden Benutzer-Endgeräte angezeigte HTML-Seite durchzuführen und/oder zu ändern.

7. Verfahren nach einem der Ansprüche 1 bis 6, bei dem der Zugriff jedes der Endgeräte, des Organisator-Benutzers und der eingeladenen Benutzer, zum dedizierten Server von jedem der Endgeräte über eine periodische Abfrage des dedizierten Servers durchgeführt wird.

8. System zur automatischen und gleichzeitigen Verteilung von elektronischen Dokumenten unterschiedlicher Formate im Internet zwischen verschiedenen Benutzern von Endgeräten, die über unterschiedliche Zugriffsnetze verbunden sind, während einer gemeinsamen Sitzung, die aus einem gemeinsamen Zugriff zu einem für die Sitzung dedizierten Server besteht, **dadurch gekennzeichnet, dass** es mindestens einen dedizierten Server aufweist, der eine Dienst-Plattform bildet, wobei die Dienst-Plattform mindestens aufweist:

- einen Sitzungsorganisatormodul, der auf Anruf auf Initiative eines der Endgeräte-Benutzer, der der Organisator der Sitzung ist, ermöglicht, die Sitzung zu initialisieren, wobei der aus der Initialisierung bestehende Schritt mindestens nach einer Verbindung des Endgeräts des Organisator-Benutzers mit dem dedizierten Server die Erstellung einer Liste der Namen, Vornamen und elektronischer Adresse der anderen zur Sitzung eingeladenen Benutzer und die Auswahl der während der Sitzung zu verteilenden elektronischen Dokumente enthält,
- einen Modul zum Empfang und zur Umwandlung der zu verteilenden elektronischen Dokumente in mehrere aufeinanderfolgende laufende Seiten im einzigen HTML-Format,
- einen Modul zur Online-Verfügbarmachung der mehreren aufeinanderfolgenden laufenden Seiten im einzigen HTML-Format, auf der Ebene der Website des dedizierten Servers,
- einen Modul zur Übertragung von Einladungsmitteilungen zur Teilnahme an der Sitzung an jedes der Endgeräte, den Organisator-Benutzer und die eingeladenen Benutzer, wobei jede Einladungsmitteilung mindestens die Adresse der Website des dedizierten Servers und das Datum und die Uhrzeit der Sitzung enthält; und
- einen Modul der Zugriffskontrolle zur Seite des dedizierten Servers bei jedem der Benutzer-Endgeräte, wobei der Zugriffskontrollmodul einen Authentifizierungsmodul jedes Organisator-Benutzer-Endgeräts gegenüber der Dienst-Plattform, bzw. jedes Organisator-Benutzer-Endgeräts und jedes eingeladenen Endgeräts gegenüber der durch das Organisator-Benutzer-Endgerät organisierten Sitzung aufweist.

9. System nach Anspruch 8, bei dem jede Einladungsmitteilung zur Teilnahme an der Sitzung an jedes der Endgeräte des Organisator-Benutzers und der eingeladenen Benutzer außer der Adresse der Website des dedizierten Servers ein für die Sitzung und für jedes der Endgeräte des Organisator-Benutzers und der eingeladenen Benutzer dedi-ziertes Passwort enthält.

$$\left( \{U_i\}_{i=0}^{K} \ DS \right)$$

$U_0$

Initialisation
$\{U_i\}_{i\neq0}$ [LU,LD] — A

Transmission vers DS
[LU,LD] — B

- - - - - - - - - - - - - - - - - - - - - - - - - - - -

DS

Transformation
$\forall D_x \in LD \rightarrow \{HTML_y\}_{y=1}^{Y}$ — C

Transmission DS$\rightarrow\{U_i\}_{i=1}^{K}$
IMS[ADS,Sdate,SH]
ADS[IDS] — D

Autorisation d'accès
conditionnelle de:
$\forall U_i \in \{U_i\}_{i=0}^{K}$ à $\{HTML_y\}_{y=1}^{Y}$ — E

## FIG.1

$$\boxed{\begin{array}{c}\textit{Transmission vers DS}\\ \textit{[LU,LD];GIS}\end{array}} \subset \text{—B}$$

**FIG.2A**

$$[U_i[CS]] \qquad [U_i[CS[AD]]]$$
$$1) \qquad\qquad 2)$$

**FIG.2B**

$$[ADS[IDS[Sdate[SH]]]]$$

**FIG.2C**

$$\boxed{\begin{array}{c}\textit{Connexion}\\ U_i \text{ à } DS\end{array}} \subset \text{—E0}$$

$$\boxed{[U_i^*[IDS^*]]} \subset \text{—E1}$$

$$E2$$

$$\diamondsuit \begin{array}{c} U_i^* \in LU \\ ET \\ IDS^* = Vrai? \end{array} \xrightarrow{\ -\ } \boxed{\begin{array}{c}\textit{Refus}\\ \textit{accès}\end{array}} \subset \text{—E3}$$

$$+$$

$$\boxed{\begin{array}{c}\textit{Accès à}_y\\ \{HTML_y\}_{y=1}\end{array}} \subset \text{—E4}$$

**FIG.2D**

Accès à
$\{HTML_y\}_{y=1}^{Y}$  par $U_i$ — E40

Affichage page
courante $HTML_{y=s}$ — E41

Actualisation
$s=t$

$\exists$ choix
$HTML_{y=t}$
$t \neq s$ — E42

E43

**_FIG.3_**

*FIG.4A*

*FIG.4B*

FIG.5